Europäisches Patentamt

(19) European Patent Office

Office européen des brevets

(11) Veröffentlichungsnummer: **0 111 817**
**A2**

(12) # EUROPÄISCHE PATENTANMELDUNG

(21) Anmeldenummer: **83112213.0**

(22) Anmeldetag: **05.12.83**

(51) Int. Cl.³: **G 21 C 3/10**

(30) Priorität: **16.12.82 DE 3246681**

(43) Veröffentlichungstag der Anmeldung:
**27.06.84 Patentblatt 84/26**

(84) Benannte Vertragsstaaten:
**BE CH DE FR GB IT LI NL SE**

(71) Anmelder: **INTERATOM Internationale Atomreaktorbau GmbH**
**Friedrich-Ebert-Strasse**
**D-5060 Bergisch Gladbach 1(DE)**

(72) Erfinder: **Gestermann, Fritz, Dr**
**Berliner Strasse 83**
**D-5090 Leverkusen 1(DE)**

(72) Erfinder: **Classen, Josef, Dipl.-Ing.**
**Eschweilerstrasse 6**
**D-5112 Baesweiler(DE)**

(74) Vertreter: **Mehl, Ernst, Dipl.-Ing. et al,**
**Postfach 22 01 76**
**D-8000 München 22(DE)**

(54) **Kappe für einen Brennstab eines Kernreaktors mit erhöhter Ablagerungsneigung für Spaltprodukte aus Stabdefekten.**

(57) In der vorliegenden Erfindung wird zur Erhöhung der Nachweisempfindlichkeit von Messungen zur Auffindung eines defekt gewordenen Brennstabes vorgeschlagen, die oberen Endkappen für Brennstäbe von flüssigkeitsgekühlten Kernreaktoren durch Gestaltung bzw. Beschaffenheit ihrer Form und/oder ihrer Oberfläche mit einer erhöten Ablagerungsneigung für von Kühlmittel mitgeführte Ausschwemmungen von Spaltprodukten aus Stabdefekten auszustatten. Als besondere Maßnahmen zur Erhöhung der Ablagerungen werden Formveränderungen vorgeschlagen, welche Abrißwirbel verursachen, so z.B. Abrißkanten (11, 12) oder konkave Bereiche (13) oder aber die Aufrauhung bzw. Beschichtung von Teilen (14) der Brennstabkappen. Insbesondere wird eine Beschichtung mit einem Gettermaterial für bestimmte Isotope vorgeschlagen. Aufrauhen, Beschichten oder Abplatten der Kappenspitze lassen sich auch nachträglich an schon vorhandenen Brennstäben durchführen.

FIG 1

EP 0 111 817 A2

0111817
82 P 6745 E

INTERATOM

Internationale Atomreaktorbau GmbH

D-5060 Bergisch Gladbach 1

## Kappe für einen Brennstab eines Kernreaktors mit erhöhter Ablagerungsneigung für Spaltprodukte aus Stabdefekten

Die vorliegende Erfindung betrifft eine Kappe für einen Brennstab nach dem Oberbegriff des Hauptanspruchs. Bei flüssigkeitsgekühlten Kernreaktoren bestehen die einzelnen Brennelemente aus einer großen Anzahl von mit Brennstoff gefüllten Brennstäben. Diese Brennstäbe sind an ihrem oberen Ende mit einer Kappe verschlossen. Bisher ist es üblich, die Kappe nur nach fertigungstechnischen Gesichtspunkten und nach ihrem Verhalten in der Strömung des Kühlmittels herzustellen. Normalerweise sind daher die Kappen, abgesehen von einzelnen fertigungstechnischen Unterschieden, möglichst strömungsgünstig gestaltet und weisen keine funktionalen Besonderheiten auf.

Es hat sich aber herausgestellt, daß Ablagerungen von Spaltprodukten an der Oberfläche der Brennstabkappen dazu beitragen können, einen defekten Brennstab in einem Bündel anhand der Aktivität der Ablagerungen zu bestimmen. Um die Empfindlichkeitsschwelle solcher Messungen, welche mit Probenentnahmen an den Spitzen der einzelnen Brennstabkappen verbunden sind, zu erhöhen, ist es wünschenswert, die Neigung zu Ablagerungen an den Brennstabkappen zu erhöhen.

Aufgabe der vorliegenden Erfindung ist daher eine Brennstabkappe, welche eine erhöhte Ablagerungsneigung für vom Kühlmittel mitgeführte aus einem defekten Brenn-

03.12.82 Nw/Pa

stab ausgetretene Spaltprodukte aufweist.

Zur Lösung dieser Aufgabe wird nach dem Hauptanspruch vorgeschlagen, eine erhöhte Ablagerungsneigung durch Gestaltung bzw. Beschaffenheit von Form und/oder Oberfläche der Kappe hervorzurufen. Durch Vergrößerung der Oberfläche und geeignete Formgestaltung kann die Ablagerungsneigung unter Umständen erheblich erhöht werden. Da in einem Brennstabbündel nur eine geringe Querverwirbelung des hindurchströmenden Kühlmittels auftritt, werden aus einem Brennstab austretende Spaltprodukte bevorzugt entlang diesem Brennstab transportiert und lagern sich zu einem Teil an der Kappe ab, wo sie später mit Hilfe von Probenabstrichen nachgewiesen werden können.

Gemäß dem Anspruch 2 unterstützen insbesondere Abrißwirbel im vorbeiströmenden Kühlmittel die Ablagerung, so daß durch eine entsprechende, abrißwirbelbegünstigende Form der Spitze ein besonders günstiger Effekt erzielt wird.

Im Anspruch 3 wird dazu in besonderer Ausgestaltung vorgeschlagen, die Kappe mit einer Abrißkante und/oder einem leicht konkav gewölbten Bereich auszuführen. Auf diese Weise entstehen Abrißwirbel in einem bestimmten Bereich der Spitze und die Ablagerungen lagern sich in diesem Bereich ab.

Im Anspruch 4 wird in weiterer Ausgestaltung der Erfindung vorgeschlagen, die Kappe an ihrer Spitze abgestumpft oder nach innen gewölbt zu gestalten. Beide Formen begünstigen Verwirbelungen und damit Ablagerungen und ermöglichen außerdem später eine gezielte Probenentnahme.

Im Anspruch 5 wird vorgeschlagen, zur Erhöhung der Ablagerungsneigung die Oberfläche mindestens eines Teils der Kappe aufzurauhen. Dadurch wird die Oberfläche vergrößert, so daß sich mehr Material ablagern kann.

Eine alternative oder zusätzliche Möglichkeit ist im Anspruch 6 vorgeschlagen. Danach wird die Oberfläche der Kappe wenigstens teilweise mit einem Gettermaterial für bestimmte Ablagerungen beschichtet. Es sind Materialien bekannt, welche für bestimmte Elemente eine besonders hohe Affinität besitzen, so daß die Ablagerungen in Quantität und Qualität durch Verwendung eines Gettermaterials gezielt beeinflußt werden können.

Im Anspruch 7 wird in spezieller Ausgestaltung vorgeschlagen, als Gettermaterial Zirkon oder Niob zu verwenden, da dieses eine erhöhte Ablagerung von Cäsiumisotopen bewirkt, deren Aktivität später nachgewiesen werden kann.

Im Anspruch 8 wird als weitere Möglichkeit vorgeschlagen, als Gettermaterial ein für $\alpha$-oder $\beta$-Strahler spezifisches Material zu wählen. $\alpha$-und $\beta$-Strahler eignen sich nach einem Probenabstrich an den Spitzen der Brennstäbe besonders zum Nachweis durch eine Fotoplatte.

Im Anspruch 9 wird schließlich vorgeschlagen, das Gettermaterial in einer Aussparung an der Spitze der Kappe unterzubringen. Dies kann für bestimmte Arten der Probenentnahme Vorteile mit sich bringen.

Die angegebenen erfindungsgemäßen Ausführungen können

-4-

einzeln oder in Kombination für die Gestaltung einer Kappe mit erhöhter Ablagerungsneigung herangezogen werden. Insbesondere sind einige der vorgeschlagenen Formen, z.B. aufgerauhte, mit Gettermaterial beschichtete oder abgestumpfte Brennstabkappen sehr leicht aus den bisher verwendeten Kappen durch einfache Bearbeitungsvorgänge herzustellen. Dies ist von besonderer Bedeutung für bereits in der Fertigung oder im Betrieb befindliche Stäbe.

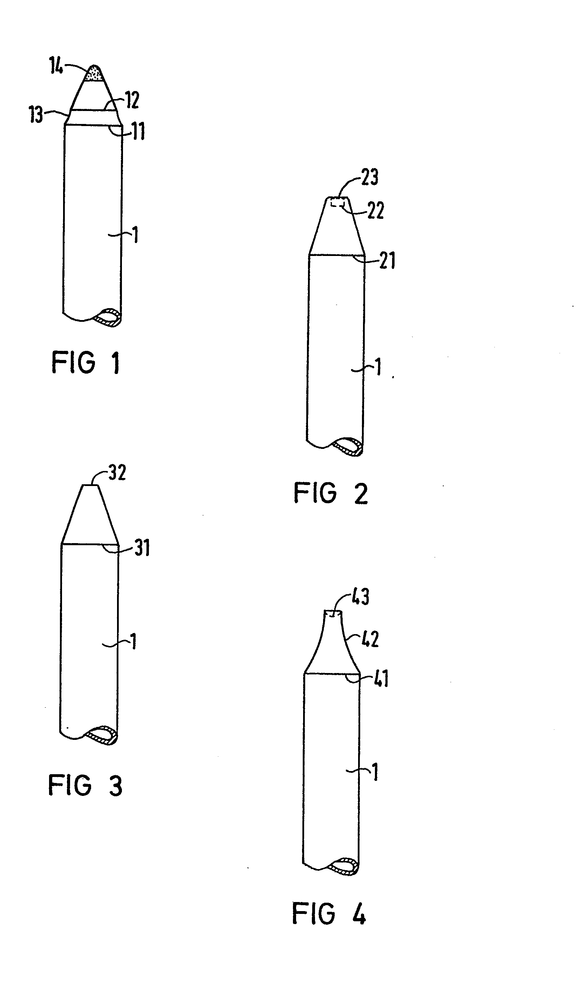

Einige Ausführungsbeispiele der Erfindung, jeweils mit einer oder mehreren der vorgeschlagenen Merkmale sind in der Zeichnung dargestellt und zwar zeigen Fig. 1 - 4 eine Auswahl von möglichen Gestaltungen für Brennstabkappen.

In Fig. 1 ist ein Brennstab 1 dargestellt, dessen Kappe zwei Abrißkanten 11, 12 aufweist, zwischen denen sich ein leicht konkav gewölbter Bereich 13 befindet. Das obere Ende 14 der Kappe ist, wie in der Zeichnung angedeutet, aufgerauht bzw. mit einem Gettermaterial beschichtet.

In Fig. 2 ist ebenfalls ein Brennstab 1 mit einer anderen Kappenausführung dargestellt. Die Kappe beginnt mit einer nur schwach ausgeprägten Abrißkante 21 und weist an ihrer Spitze eine Aussparung 22 auf, in welcher ein Gettermaterial 23 eingelagert ist.

In Fig. 3 ist ein Brennstab 1 dargestellt, welcher eine Kappe aufweist, wie sie beispielsweise bisher Anwendung findet. Lediglich die Spitze 32 der Kappe ist abgeflacht, wodurch sich gerade dort verstärkt Ablagerungen bilden können.

-5-

In Fig. 4 ist eine Brennstabkappe mit einer besonders ausgeprägten Abrißkante 41 und einer Spitze mit leicht konkaven Flanken 42 dargestellt. An der Spitze ist zusätzlich eine leichte Einbeulung 43 vorgesehen.

Eine größere Zahl von Gestaltungsmöglichkeiten für Brennstabkappen ist denkbar, wobei gegebenenfalls fertigungstechnische Vorteile den Ausschlag für die eine oder andere Form geben können.

INTERATOM          -6-

Internationale Atomreaktorbau GmbH

D-5060 Bergisch Gladbach 1


<u>Kappe für einen Brennstab eines Kernreaktors mit erhöhter
Ablagerungsneigung für Spaltprodukte aus Stabdefekten</u>


<u>Patentansprüche</u>


1. Kappe für einen Brennstab (1) eines flüssigkeitsgekühlten Kernreaktors,
d a d u r c h   g e k e n n z e i c h n e t ,
daß die Kappe durch Gestaltung bzw. Beschaffenheit ihrer
Form und/oder Oberfläche eine erhöhte Ablagerungsneigung
für vom Kühlmittel mitgeführte Ausschwemmungen aufweist.


2. Brennstabkappe nach Anspruch 1,
d a d u r c h   g e k e n n z e i c h n e t ,
daß die Form der Spitze Ablagerungen durch Abrißwirbel
im vorbeiströmenden Kühlmittel begünstigt.


3. Brennstabkappe nach Anspruch 1 oder 2,
d a d u r c h   g e k e n n z e i c h n e t ,
daß die Kappe eine Abrißkante (11, 21, 31, 41) und/oder
einen leicht konkav gewölbten Bereich (13, 42) aufweist.


4. Brennstabkappe nach Anspruch 1, 2 oder 3
d a d u r c h   g e k e n n z e i c h n e t ,
daß die Kappe an ihrer Spitze abgestumpft (32) oder nach
innen gewölbt (43) ist.


5. Brennstabkappe nach einem der vorhergehenden Ansprüche,
d a d u r c h   g e k e n n z e i c h n e t ,
daß die Oberfläche mindestens eines Teils der Kappe aufgerauht (14) ist.


03.12.82 Nw/Pa

-7-

6. Brennstabkappe nach einem der vorhergehenden Ansprüche,

d a d u r c h   g e k e n n z e i c h n e t ,

daß die Oberfläche der Kappe wenigstens teilweise mit einem Gettermaterial für bestimmte Ablagerungen beschichtet ist.

7. Brennstabkappe nach Anspruch 6,

d a d u r c h   g e k e n n z e i c h n e t ,

daß das Gettermaterial Zirkon oder Niob als Getter für Cäsiumisotope ist.

8. Brennstabkappe nach einem der vorhergehenden Ansprüche,

d a d u r c h   g e k e n n z e i c h n e t ,

daß das Gettermaterial ein Getter für $\alpha$-oder $\beta$-Strahler ist.

9. Brennstabkappe nach einem der vorhergehenden Snsprüche,

d a d u r c h   g e k e n n z e i c h n e t ,

daß das Gettermaterial in einer Aussparung (22) an der Spitze der Kappe untergebracht ist.

01.1181.7

82 P 6745

FIG 1

FIG 2

FIG 3

FIG 4